# EUROPÄISCHE PATENTANMELDUNG

(11) **EP 4 357 395 A1**
(43) Veröffentlichungstag der Anmeldung: **24.04.2024**
(21) Anmeldenummer: 23202528.8
(22) Anmeldetag: 09.10.2023
(51) Int. Cl.: C08J 9/12, C08J 9/30

(54) **ALTERNATIVES TREIBMITTEL MIT NIEDRIGEM CO2 FOOTPRINT**

(30) Priorität: 21.10.2022 DE 102022211220
(71) Anmelder: Benecke-Kaliko AG, 30419 Hannover (DE)
(72) Erfinder: Dr. Neumann, Thorsten, 30165 Hannover (DE); Acar, Kubilay Deniz Cem, 30165 Hannover (DE); Heckel, Andreas, 30165 Hannover (DE)
(74) Vertreter: Continental Corporation

(57) **Zusammenfassung**

Es wird ein Verfahren zur Herstellung eines Schaumstoffs beschrieben, welches umfasst a) das Einbringen von gasförmigem CO₂ in eine Weichmacher enthaltende Kunststoffpaste oder eine wässrige Kunststoffdispersion, um eine CO₂ enthaltende Kunststoffpaste oder Kunststoffdispersion zu erhalten, b) das Aufbringen der CO₂ enthaltenden Kunststoffpaste oder Kunststoffdispersion auf eine Unterlage und c) die Wärmebehandlung der aufgebrachten CO₂ enthaltenden Kunststoffpaste oder Kunststoffdispersion, um die aufgebrachte CO₂ enthaltende Kunststoffpaste oder Kunststoffdispersion unter Bildung des Schaumstoffs zu schäumen und zu verfestigen.

Der Schaumstoff wird bevorzugt in Form eines Flächenkörpers hergestellt, der sich als Komponente für Kunstleder eignet.

## Beschreibung

Die Erfindung betrifft ein Verfahren zur Herstellung eines Schaumstoffs auf Basis von Kunststoffpasten oder wässrigen Kunststoffdispersionen, die daraus erhältlichen Schaumstoffe und die Verwendung.

Zum Schäumen von Kunststoffdispersionen und Kunststoffpasten können chemische Treibmittel oder physikalische Treibmittel, wie z.B. Luft, Hohlkugeln oder poröse Partikel, eingesetzt werden.

Gegenwärtig werden zur Herstellung von geschäumten undurchlässigen und durchlässigen Filmen Kunststoffe mit Hilfe von chemischen Treibmitteln, wie z.B. Azodicarbonamid, Citronensäure oder Citrate, Oxybisbenzolsulfonylhydrazid (OBSH) oder Natriumcarbonat, geschäumt. Dabei wird das Treibmittel als festes Medium in einer Kunststoffmasse verteilt.

Beim Einsatz von chemischen Treibmitteln ist die Verteilung des Treibmittels als festes Medium in der Kunststoffmasse abhängig von der Feinheit des Pulvers und von der Dispergierbarkeit. Außerdem weisen die meisten chemischen Treibmittel einen hohen CO₂-Fußabdruck auf. Zudem sind einige übliche chemische Treibmittel in der REACH-Liste der europäischen Chemikalienverordnung aufgeführt und sollten nicht mehr eingesetzt werden, wie beispielsweise Azodicarbonamid und OBSH. Zusätzlich benötigen diese Treibmittel, insbesondere Azodicarbonamid, hohe Zersetzungstemperaturen.

Eine Alternative wäre Natriumhydrogencarbonat, welches als Pulver eingesetzt wird. Allerdings liefert es nicht die gewünschte Gasausbeute. Außerdem fällt zusätzlicher Füllstoff durch das notwendige Säuerungsmittel, z.B. Dinatriumdiphosphat, an. Dieser kann auch die Matrix versteifen.

Für Schlagschäume wird generell Luft als Treibmittel in Kunststoffmassen verwendet. Diese Massen werden durch einen Schlagschaummischer aufgeschlagen. Dieses physikalische Schäumen wird beispielsweise für PVC-Pasten und Polyurethanschäume verwendet.

Probleme bei den physikalischen Schäumen mit Luft bestehen darin, dass die Schäume bei längerer Verweildauer zerfallen. Sie sind auch sensitiv gegenüber Luftgeschwindigkeiten und Temperaturdifferenzen beim Trocknen im Ofen.

Des weiteren lassen sich mit den genannten Verfahren nicht alle Kunststoffe in einen Schaumstoff überführen. Für Dispersionen von Polyvinylbutyral (PVB), die beispielsweise von Shark Solutions erhältlich sind, konnten z.B. keine chemischen Treibmittel gefunden werden, welche eine Schaumstruktur zulassen. Ebenso zeigte ein Schlagschaum mit Luft keine Erfolge.

Physikalisches Treibmittel auf Basis von Hohlkugeln oder poröser Partikel führen zu einer chemisch divergenten Matrix in der Schaumstruktur, da das Treibmittel im Schaumstoff verbleibt, was häufig nicht gewünscht ist.

So wurden bei Polymersystemen wie beispielsweise PVB Dispersionen, bei welchen mit chemischen Treibmitteln, wie z.B. OBSH oder Azodicarbonamid, keine zufriedenstellende Schaumstruktur erhalten werden kann, alternativ Mikrohohlkugeln für das physikalische Schäumen verwendet. Dadurch ergaben sich zwei Probleme. Zum einen wird die Polymermatrix des resultierenden Schaumstoffs mit Mikrohohlkugeln deutlich härter, zum anderen ist die chemische Kompatibilität des gebildeten Schaumstoffs hinsichtlich Nachhaltigkeit, Abbaubarkeit (bei abbaubaren Polymeren) und Recyclingfähigkeit (Materialreinheit) nicht gegeben.

Die Aufgabe der Erfindung bestand darin, ein alternatives Schaumverfahren für Kunststoffdispersionen und Kunststoffpasten zur Bildung von Schaumstoffen bereitzustellen, das einen niedrigeren CO₂-Fußabdruck aufweist und die vorstehend aufgeführten Nachteile aus dem Stand der Technik überwindet. Insbesondere sollte ein Schaumstoff mit homogener Blasenstruktur und stabilem Schaum erhalten werden. Überdies sollte die vor der Wärmebehandlung zur Schaumstoffbildung erhaltenen Schaumstoffvorstufen bzw. Schlagschäume eine verbesserte Lagerstabilität aufweisen.

Die Erfinder haben überraschenderweise festgestellt, dass diese Aufgabe durch die Verwendung von CO₂ als physikalisches Treibmittel zur Bildung von Schaumstoffen aus Kunststoffpasten und wässrigen Kunststoffdispersionen gelöst werden kann.

Die Erfindung betrifft somit ein Verfahren zur Herstellung eines Schaumstoffs, umfassend
a) das Einbringen von gasförmigem CO₂ in eine Weichmacher enthaltende Kunststoffpaste oder eine wässrige Kunststoffdispersion, bevorzugt mittels Überdruck, um eine CO₂ enthaltende Kunststoffpaste oder Kunststoffdispersion zu erhalten,
b) das Aufbringen der CO₂ enthaltenden Kunststoffpaste oder Kunststoffdispersion auf eine Unterlage und
c) die Wärmebehandlung der aufgebrachten CO₂ enthaltenden Kunststoffpaste oder Kunststoffdispersion, um die aufgebrachte CO₂ enthaltende Kunststoffpaste oder Kunststoffdispersion unter Bildung des Schaumstoffs zu schäumen und zu verfestigen.

Durch das erfindungsgemäße Verfahren kann der Einsatz von chemischen Treibmitteln vermieden werden, so dass schon von daher ein niedrigerer CO₂-Fußabdruck erreicht werden kann. Auch der Einsatz von Hohlkugeln oder porösen Partikeln mit den vorstehend beschriebenen Nachteilen kann vermieden werden. Ein Nachteil von Hohlkugel wird meist durch eine erhöhte Härte des Kunststofffilms mit gleichzeitiger reduzierten Flexibilität festgestellt.

Wenn ein Schlagschaum mit Luft hergestellt wird, welches sich im wässrigen Medium wie nachstehend erörtert nur sehr bedingt löst, sind die Luftblasen des aufgeschlagenen Schaums deutlich zu erkennen. Beim Ausheizen eines solchen mit Luft versehenen Schlagschaums, z.B. eines PUR-Schlagschaumes, kann man bei der anschließenden Wärmebehandlung erkennen, dass die Blasenstruktur beeinträchtigt wird, bzw. die Blasen des Schlagschaumes kollabieren.

Im Gegensatz dazu ist bei nach dem erfindungsgemäßen Verfahren erhaltenen CO₂ enthaltenden Massen, wie einer mit CO₂ aufgeschlagenen Masse von Polyurethan, ein Schaum nur bedingt erkennbar, da das entsprechende CO₂ gelöst ist. Dieses wir mit steigender Temperatur bei der Wärmebehandlung zunehmend in Wasser unlöslich und bildet einen Schaum. Dadurch, dass die Schaumstruktur erst bei der Wärmebehandlung entsteht, liegt eine homogenere Verteilung der Blasenstruktur vor. Dies wiederum führt zu einem stabilen mechanischen Schaum.

Durch das in den Schaum gefangene CO₂ kann auch die CO₂-Bilanz oder das Global Warming Potential des Materials verbessert werden. Das CO₂ bleibt in der Polymermatrix gefangen.

Ein weiterer Vorteil gegenüber Luft-Schlagschäumen besteht darin, dass die in Schritt a) des erfindungsgemäßen Verfahrens erhaltenen CO₂ enthaltenden Pasten oder Dispersionen unter entsprechendem Druck aufbewahrt werden können. D.h. ein Zusammenfallen der CO₂ enthaltenden Pasten oder Dispersionen über die Zeit ist nicht zu erkennen. Alternativ kann die Masse gekühlt ebenfalls für mehrere Tage aufbewahrt werden, ohne dass die Masse an Schaumvermögen verliert.

Zusätzlich führt CO₂ zu einer Reduktion des pH-Wertes. Bei geladenen Dispersionen, welche durch einen alkalischen pH stabil gehalten werden, kann zusätzlich zum Aufschäumen von CO₂ eine Koagulierung der Polymerketten an der gebildeten CO₂-Blase erfolgen. Dadurch kommt es zu einer lokalen, im Mikrometermaßstab vorliegenden Fällung des Polymers, welches in Kontakt mit dem CO₂-Gas gekommen ist. Dies ermöglicht, dass Dispersionen auf Basis von Polyvinylbutyral (pH 8-10), Polyolefinen (pH 8-11) oder auch alkalisch stabilisierten Polyurethanen (pH 8-10), alkalisch stabilisierten Polyamid-Dispersionen sowie Polyacrylaten (8-10) wie auch entsprechende Copolymere durch die Schäumung mit CO₂ im wässrigen Medium eine homogene Schaumstruktur im trockenen, ausgeheizten Film erhalten werden kann, welches üblicherweise mit Luft nur sehr bedingt bis unmöglich der Fall ist. Durch das Schäumen des wässrigen Mediums mit Luft werden zwar Luftblasen in dem Medium gefangen, jedoch kommt es bei Ausheizen des Films zum Kollabieren des Schaumes. Die Ausheiztemperaturen sind üblicherweise die Verfilmungstemperaturen, welche je nach Polymer in einem Bereich von 80 bis 180°C liegen können.

Nachfolgend wird die Erfindung ausführlich erläutert.

Das erfindungsgemäße Verfahren zur Herstellung eines Schaumstoffs umfasst gemäß Schritt a) das Einbringen von gasförmigem CO₂, bevorzugt mittels Überdruck, in eine Weichmacher enthaltende Kunststoffpaste oder eine wässrige Kunststoffdispersion, um eine CO₂ enthaltende Kunststoffpaste oder Kunststoffdispersion zu erhalten.

Das gasförmige CO₂ kann bei Normaldruck in die Weichmacher enthaltende Kunststoffpaste oder die wässrige Kunststoffdispersion eingebracht werden, um eine CO₂ enthaltende Kunststoffpaste oder Kunststoffdispersion zu erhalten. Dies kann z.B. durch mechanischen Einschlag bzw. Einrühren oder Einblubbern erfolgen. Tests haben z.B. gezeigt, dass eine Paste, welche mit CO₂ bei Normaldruck behandelt worden ist, beim Ausheizen im Ofen eine Schaumstruktur bildet.

Es ist aber bevorzugt, das gasförmige CO₂ mittels Überdruck bzw. bei einem Gegendruck in die Weichmacher enthaltende Kunststoffpaste oder die wässrige Kunststoffdispersion einzubringen, um die CO₂ enthaltende Kunststoffpaste oder Kunststoffdispersion zu erhalten. Dies ist insbesondere für industrielle Anwendungen bevorzugt.

Das Einbringen des gasförmigen CO₂ (Kohlendioxid oder Kohlenstoffdioxid) mittels Überdruck kann auf jede übliche, dem Fachmann bekannte Methode erfolgen. Zum Einbringen des CO₂-Gases in die wässrige Kunststoffdispersion oder die Weichmacher enthaltende Kunststoffpaste können z.B. Düsen, Fritten (zum Einblubbern), mechanischer Einschlag, Schaumgeneratoren, Überdrucksysteme oder eine Kombination davon verwendet. Es ist auch möglich, alternativ oder zusätzlich bereits mit CO₂ versetzte wässrige Medien der wässrigen Kunststoffdispersion zuzusetzen oder mit CO₂ versetzten Weichmacher oder mit CO₂ versetzte Weichmacher enthaltende Mischungen der Kunststoffpaste zuzusetzen.

In einer bevorzugten Ausführungsform wird das gasförmige CO₂ als Treibmittel mittels Überdruck durch Einpressen, Einblubbern oder mittels Schlagschaummischer in die Weichmacher enthaltende Kunststoffpaste oder die wässrige Kunststoffdispersion eingebracht.

Es ist besonders bevorzugt, das gasförmige CO₂ mittels Schlagschaummischer in die Weichmacher enthaltende Kunststoffpaste oder die wässrige Kunststoffdispersion einzubringen. Solche Schlagschaummischer sind handelsüblich. Beispielsweise werden geeignete Schlagschaummischer von der Firma Hansa Mixer, Deutschland, vertrieben.

Beim Einbringen des gasförmigen CO₂ in die wässrige Kunststoffdispersion löst sich das CO₂-Gas in Wasser. CO₂ ist im Gegensatz zu Luft sehr gut in Wasser löslich, was die nachstehend aufgeführten Werte für die Löslichkeit der Gase in Wasser verdeutlicht (vgl. F. Wisotzky, Angewandte Grundwasserchemie, Hydrogeologie und hydrogeochemische Modellierung Grundlagen, Anwendungen und Problemlösungen, Springer-Verlag Berlin Heidelberg 2011, ISBN 978-3-642-17812-2, S. 65):
Löslichkeit von CO₂ in Wasser bei 20°C: ~1700mg/L
Löslichkeit von Stickstoff in Wasser bei 20°C: ~20 mg/L
Löslichkeit von Sauerstoff in Wasser bei 20°C: ~45 mg/L

Die Löslichkeit der Gase ist temperaturabhängig. So kann mehr CO₂ gelöst werden, wenn das CO₂ bei einer niedrigeren Temperatur eingebracht wird. Die Löslichkeit der Gase ist auch druckabhängig. So kann bei höheren Drücken mehr CO₂ gelöst werden.

In analoger Weise ist CO₂ auch in Kunststoffpasten, die Weichmacher enthalten, wie z.B. weichmacherhaltigen PVC-Pasten, löslich. Die Löslichkeit des CO₂ Gases in der Paste nimmt ebenfalls mit steigender Temperatur ab.

Ohne sich an eine Theorie binden zu wollen, wird davon ausgegangen, dass beim Einbringen von Luft in dem sich bildenden Schlagschaum nur geringe Teile der Luft gelöst sind, während das CO₂ beim erfindungsgemäßen Verfahren in großen Teilen in gelöster Form vorliegt, was ein wichtiger Grund für die vorteilhaften Wirkungen des erfindungsgemäßen Verfahren sein dürfte.

Beim Einbringen des gasförmigen CO₂ mittels Überdruck bzw. bei einem Gegendruck in die Weichmacher enthaltende Kunststoffpaste oder die wässrige Kunststoffdispersion gemäß der bevorzugten Ausführungsform beträgt der Überdruck bevorzugt mindestens 0,1 bar, bevorzugt mindestens 0,5 bar, besonders bevorzugt mindestens 1 bar. In der Regel ist der Überdruck nicht mehr als 10 bar, bevorzugt nicht mehr als 5 bar. Die hier angegebenen Druckwerte beziehen sich auf den Relativdruck. Der Überdruck kann auch als Gegendruck bezeichnet werden.

Je nachdem, ob das CO₂ in eine wässrige Kunststoffdispersion oder in eine weichmacherhaltige Kunststoffpaste eingebracht werden soll, kann der zweckmäßige Überdruck variieren. Bei einer wässrigen Kunststoffdispersion können relativ geringe Gegendrücke ausreichen, während bei den weichmacherhaltigen Kunststoffpasten in der Regel ein höherer Gegendruck zweckmäßiger ist. Idealerweise ist der Überdruck bei Einbringen des CO₂ in eine weichmacherhaltige Kunststoffpaste, insbesondere PVC-Paste, oberhalb von 0,5 bar, bevorzugte oberhalb von 3 bar CO₂, um eine entsprechende Löslichkeit des Gases in der Masse zu gewährleisten.

Der Überdruck, mit dem CO₂ in die wässrige Kunststoffdispersion eingebracht wird, liegt bevorzugt im Bereich von 0,1 bis 5 bar, bevorzugter 0,5 bis 5 bar, besonders bevorzugt 1 bis 4 bar. Diese Werte sind jedoch maschinenspezifisch und können z.B. je nach Schlagschaummischer und Gegendrucksystem variieren.

Der Überdruck, mit dem CO₂ in die Weichmacher enthaltende Kunststoffpasten eingebracht wird, liegt bevorzugt im Bereich von 0,5 bis 5 bar, bevorzugter 2 bis 4 bar.

Die wässrige Kunststoffdispersion wird auch als wässrige Polymerdispersion bezeichnet. Andere Bezeichnungen sind Kunststofflatex bzw. Polymerlatex. Die wässrige Kunststoffdispersion enthält Kunststoffpartikel bzw. Polymerpartikel, die in einer wässrigen Phase dispergiert sind. Solche wässrigen Kunststoffdispersionen sind für eine Reihe von unterschiedlichen Polymeren bekannt und im Handel erhältlich.

Beispiele für eine wässrige Kunststoffdispersion, die für das erfindungsgemäße Verfahren zweckmäßig sind, sind eine wässrige Dispersion von Polyvinylbutyral (PVB), Polyvinylchlorid (PVC), Polyurethan (PU), Polyamid, Polyester, Polyacrylat oder Polyolefin. Eine alternative Bezeichnung hierfür sind eine wässrige PVB-Dispersion, wässrige PVC-Dispersion, wässrige PU-Dispersion bzw. PUD, eine wässrige Polyamid-Dispersion, wässrige Polyacrylat-Dispersion, wässrige Polyester-Dispersion oder wässrige Polyolefin-Dispersion bzw. POD. Solche Polymerdispersionen sind im Handel erhältlich.

Die wässrige Kunststoffdispersion ist bevorzugt eine wässrige PVB-Dispersion, eine wässrige PU-Dispersion oder eine wässrige Polyolefin-Dispersion, wobei eine wässrige PVB-Dispersion besonders bevorzugt ist.

Das Polyurethan der wässrigen PU-Dispersion kann z.B. Polyesterpolyurethan, Polyetherpolyurethan, Polycarbonatpolyurethan oder eine Kombination davon sein. Beispiele für im Handel erhältliche PU-Dispersionen sind die Produkte Impranil^{®} von Covestro.

Das Polyolefin der wässrigen Polyolefin-Dispersion kann z.B. ausgewählt sein aus Polyethylenen, Polypropylenen, Polyisobutylenen, Ethylen-Propylen-Copolymeren, Copolymeren von Ethylen und/oder Propylen mit einem oder mehreren C₄-C₁₀-Olefinen, bevorzugt alpha-Olefinen. Beispiele für im Handel erhältliche Polyolefindispersionen sind die Produkte Hypod^{®} und Canvera^{®} von DOW.

Wässrige PVB-Dispersionen werden z.B. von der Firma Shark Solutions, Roskilde, Dänemark, produziert und vertrieben.

Eine wässrige Polyacrylat-Dispersion ist z.B. eine wässrige Dispersion von Polyacrylaten, Polymethacrylaten oder Copolymeren von Acrylaten mit Comonomeren, wie Methacrylaten (Acrylat/Methacrylat-Copolymeren).

Wässrige Kunststoffdispersionen sind in der Regel durch geeignete Maßnahmen stabilisiert. Dies kann z.B. durch Einbau von kationischen, anionischen oder nichtionischen Seitengruppen in die Polymere durch Einsatz entsprechender Comonomere erfolgen. Beispiele für anionische Seitengruppen sind Sulfonatgruppen oder Carboxygruppen. Ein Beispiel für kationische Seitengruppen sind Amingruppen. Ein Beispiel für nichtionische Seitengruppen sind Polyethylenoxidgruppen. Zusätzlich oder alternativ können kationische, anionische oder nichtionische Tenside zur Stabilisierung zugesetzt werden.

In einer bevorzugten Ausführungsform handelt es sich bei der wässrigen Kunststoffdispersion um eine anionisch stabilisierte wässrige Kunststoffdispersion. Bei einer anionischen Stabilisierung werden normalerweise anionische Tenside oder Säurenanionen dem Medium hinzugefügt, welche sich an die Polymerpartikel anlagern, eine elektrisch geladene Doppelschicht bilden und somit die Partikel vor dem Koagulieren schützen. Ein Beispiel ist eine Stabilisierung mittels Kaliumoleat. Gegebenenfalls können alternativ oder zusätzlich anionische Seitengruppen, wie z.B. Sulfonatgruppen oder Carboxygruppen, in das Polymer eingebaut werden.

Die wässrige Kunststoffdispersion, bevorzugt die anionisch stabilisierte Kunststoffdispersion, weist bevorzugt einen pH-Wert von mindestens 7, bevorzugt mindestens 8, bevorzugter mindestens 9 oder sogar mindestens 10 auf, wobei der pH-Wert in der Regel nicht mehr als 11 beträgt. Der pH-Wert liegt bevorzugt im Bereich von 7 bis 11, bevorzugt 8 bis 11, besonders bevorzugt 9 bis 11.

Interessanterweise kann CO₂ gut in wässrigen Kunststoffdispersionen mit neutralen bis stark basischen pH-Werten von 7 bis 11, z.B. Polyurethan-, Polyvinylbutyral (PVB)-, Polyolefin-, Polyester-, Polyamid-, Polyacrylat- oder PVC-Dispersionen, eingebracht werden. Durch das Einbringen des CO₂ fällt dabei der pH-Wert auf ein Niveau im Bereich von z.B. 3 bis 7.

Wässrige Polyvinylbutyral-Dispersionen haben bevorzugt einen pH-Wert im Bereich von 8 bis 10. Wässrige Polyolefin-Dispersionen haben bevorzugt einen pH-Wert im Bereich von 8 bis 11. Alkalisch stabilisierte wässrige PolyurethanDispersionen, alkalisch stabilisierte wässrige Polyamid-Dispersionen und alkalisch stabilisierte wässrige Polyacrylat-Dispersionen weisen bevorzugt einen pH-Wert im Bereich von 8 bis 10 auf.

Die wässrigen Kunststoffdispersionen zum Einsatz im erfindungsgemäßen Verfahren weisen z.B. einen Feststoffgehalt im Bereich von 30 bis 70 Gew.-%, bevorzugt 40 bis 60 Gew.-%, auf.

Die Weichmacher enthaltende Kunststoffpaste wird auch als Polymerpaste bezeichnet. Solche Kunststoffpasten werden auch als Plastisole bezeichnet. Die Weichmacher enthaltende Kunststoffpaste enthält einen Kunststoff bzw. ein Polymer und mindestens einen Weichmacher. Bei den Weichmachern handelt es sich allgemein um flüssige Weichmacher. Solche Kunststoffpasten sind dem Fachmann bekannt und werden im großen Umfang verwendet.

Ein bevorzugtes Beispiel ist eine Weichmacher enthaltende Polyvinylchlorid (PVC)-Paste, die PVC und mindestens einen Weichmacher enthält. Die Kunststoffpaste, insbesondere die PVC-Paste, kann einen Weichmacher oder eine Mischung von zwei oder mehr Weichmachern enthalten. Es können die auf dem Gebiet üblichen Weichmacher eingesetzt werden.

Beispiele für geeignete Weichmacher sind Phthalsäureester, wie z.B. Dioctylterephthalat, lineares Undecylphthalat, Diisodecylphtalat (DIUP) und Diethylhexylphthalat (DEHP), Ester von aliphatischen Dicarbonsäuren oder höherwertigen Carbonsäuren, wie z.B. Adipate, Sebacate, Citrate und 1,2-Cyclohexandicarbonsäurediisononylester (DINCH), epoxydierte Öle, z.B. epoxidiertes Sojabohnenöl, Trimellitate, Polyester, Phosphorsäureester, Fettsäureester, Terephthalsäureester, Weichmacher auf Basis von Glykol, Oligoglykol oder Polyethylenglykol, Rizinusöl-basierte Weichmacher, chlorierte oder bromierte Weichmacher, Weichmacher auf Sulfatbasis, polymere Weichmacher, ionische Flüssigkeiten und Mischungen von zwei oder mehr dieser Weichmacher.

Die wässrige Kunststoffdispersion kann gegebenenfalls auch mindestens einen Weichmacher enthalten, wobei als Beispiele auf die vorstehend Genannten verwiesen wird. Der mindestens eine Weichmacher wird bevorzugt ausgewählt für Dispersionen auf Basis von PVC, PVB und in begrenztem Maße für Polyurethandispersionen, sowie Pasten auf Basis von PVC.

Der Gesamtgehalt an Weichmacher in der Kunststoffpaste, insbesondere PVC-Paste, kann z.B. im Bereich von 40 bis 150 Gew.-Teilen, bevorzugt 60 bis 120 Gew.-Teilen, pro 100 Gew.-Teilen Kunststoff bzw. PVC liegen.

In einer bevorzugten Ausführungsform enthalten die wässrige Kunststoffdispersion und/oder die Weichmacher enthaltende Kunststoffpaste, insbesondere PVC-Paste, ein oder mehrere Tenside und/oder ein oder mehrere Verdickungsmittel. Tenside und/oder Verdickungsmittel können zur Stabilisierung der Dispersion bzw. Paste bzw. des sich bildenden Schaums beitragen. Tenside und insbesondere Verdickungsmittel können dazu dienen, mögliche Ausfällungsprozesse bei der Einbringung des CO₂ zu unterbinden, insbesondere bei Einsatz einer der wässrigen Kunststoffdispersion.

Tenside und/oder Verdickungsmittel können bereits in den Ausgangsmaterialien enthalten sein und/oder der wässrigen Kunststoffdispersion bzw. der Kunststoffpaste zugesetzt werden. Die wässrige Kunststoffdispersion kann z.B. schon im Ausgangsmaterial Tenside zur Stabilisierung enthalten. Bei Kunststoffpasten, insbesondere PVC-Pasten, werden üblicherweise Seifen, also Fettsäuresalze, als Stabilisatoren verwendet.

Als Tenside können die in der Technik üblicherweise eingesetzten Tenside eingesetzt werden. Es kann sich um herkömmliche kationische, anionische oder nichtionische Tenside oder Kombinationen davon handeln. Bei den wässrigen Kunststoffdispersionen sind anionische und/oder nichtionische Tenside bevorzugt. Bei den Weichmacher enthaltenden Kunststoffpasten sind anionische Tenside, insbesondere Seifen, bevorzugt. Diese Seifen können zumindest zum Teil auch als Metallseifen vorliegen.

Bei den anionischen Tensiden kann es sich z.B. um Sulfate, Citrate, Sulfonate oder Carboxylate handeln. Konkrete Beispiele für anionische Tenside sind Alkylbenzolsulfonate, Alkoholsulfate, Alkansulfonate, Isethionate, Olefinsulfonate, Seifen, Sarcosinate, Alkylethercarboxylate und Sulfosuccinate. Beispiele für nichtionische Tenside sind Fettalkoholethoxylate, Fettalkoholalkoxylate (Fettalkohol + Ethylenoxid/Propylenoxid), Alkanolamide und EO/PO Blockpolymere. Beispiele für kationische Tenside sind Di- und Trialkylammoniumsalze.

Der Anteil an Tensid, falls eingesetzt, kann in Abhängigkeit von dem eingesetzten System und dem Tensidtyp in weiten Bereichen variieren.

Der Anteil an Tensid in der wässrigen Kunststoffdispersion, sofern vorhanden, kann z.B. im Bereich von 1 bis 15 Gew.-%, bevorzugt 5 bis 10 Gew.-%, bezogen auf den Feststoffgehalt der Dispersion, liegen. Der Anteil an Tensid in der Weichmacher enthaltenden Kunststoffpaste, insbesondere PVC-Paste, sofern vorhanden, kann z.B. im Bereich von 0,1 bis 10 Gew.-Teilen, bevorzugt 0,2 bis 6 Gew.-Teilen, bevorzugter 0,4 bis 4 Gew.-Teilen, pro 100 Gew.-Teilen Kunststoff bzw. PVC liegen.

Verdickungsmittel dienen zur Einstellung der Viskosität der Dispersion oder Paste und können damit eine Stabilisierung unterstützen. Es kann auch helfen, mögliche Ausfällungsprozesse während der Einbringung des CO₂ zu vermeiden.

Als Verdickungsmittel können die in der Technik üblichen Verdickungsmittel eingesetzt werden. Beispiele für übliche Verdickungsmittel sind Alginate, Polyacrylatverdicker, Celluloseether, Polyvinylalkohol, Pektine Polyurethanverdicker und Polyharnstoffverdicker.

Der Anteil an Verdickungsmittel, falls eingesetzt, kann z.B. in Abhängigkeit von dem eingesetzten System und dem Tensidtyp in weiten Bereichen variieren.

Der Anteil an Verdickungsmittel in der wässrigen Kunststoffdispersion, sofern vorhanden, kann z.B. im Bereich von 0,1 bis 10 Gew.-%, bevorzugt 1 bis 5 Gew.-%, bezogen auf den Feststoffgehalt der Dispersion, liegen.

Ein weiteres geeignetes Additiv für Weichmacher enthaltenden Pasten, insbesondere PVC-Pasten, ist Hydrotalcit. Hydrotalcit wird in PVC-Pasten als Stabilisator und insbesondere als HCI-Fänger eingesetzt. Eine Eigenschaft von Hydrotalcit ist, dass es CO₂ binden kann und dieses bei höheren Temperaturen wieder freisetzt.

Die wässrige Kunststoffdispersion und/oder die Weichmacher enthaltende Kunststoffpaste können ferner ein oder mehrere Additive aufweisen, z.B. ausgewählt aus Vernetzern, Füllstoffen, Flammschutzmitteln, Stabilisatoren, z.B. gegen Abbau durch UV-Licht, Wärme oder Alterung, und Farbmitteln, wie Pigmenten.

Das Einbringen von gasförmigem CO₂, bevorzugt mittels Überdruck, in die Weichmacher enthaltende Kunststoffpaste oder die wässrige Kunststoffdispersion kann in der Regel bei Umgebungstemperatur ausgeführt werden. Gegebenenfalls kann abgekühlt werden, um das CO₂ bei einer niedrigeren Temperatur einzubringen oder eine zu hohe Temperaturerhöhung durch den stattfindenden Mischvorgang zu vermeiden.

Bei dem erfindungsgemäßen Verfahren erfolgt das Einbringen von gasförmigem CO₂, bevorzugt mittels Überdruck, in die Weichmacher enthaltende Kunststoffpaste oder die wässrige Kunststoffdispersion z.B. bei einer Temperatur im Bereich von 0 bis 40 °C, bevorzugt 15 bis 30°C.

Durch das Einbringen von CO₂ in die Dispersion oder Paste wird die Dichte durch den gelösten Anteil nicht verringert. Dieses gelöste CO₂ hingegen tritt beim Erhitzen erneut aus und trägt zum zusätzlichen Schäumen bzw. Schaumstabilisieren bei.

Im erfindungsgemäßen Verfahren kann das gasförmige CO₂ z.B. in einer solchen Menge eingebracht werden, dass die Dichte bei 25 °C der Weichmacher enthaltenden Kunststoffpaste oder der wässrigen Kunststoffdispersion auf einen Wert im Bereich von 250 g/L bis 950 g/L, bevorzugt von 500g/L bis 800g/L, eingestellt wird, bezogen auf eine Dispersionsmediumdichte von 1000g/L.

Anlagen zur Herstellung von Schaumstoffen sind gewöhnlich nicht isoliert, sondern in eine größere Produktionsstätte eingebettet, in der die hergestellten Schaumstoffe z.B. als Teilkomponenten eines komplexeren Produkts weiterverarbeitet werden, z.B. von Kunstleder. Solche Produktionsstätten und auch die Herstellung der Schaumstoffe selbst benötigen Energie, die häufig über Verbrennungsprozesse vor Ort erzeugt werden. Bei solchen Verbrennungsprozessen entstehen CO₂-haltige Abgase.

Eine besonders vorteilhafte Ausgestaltung der Erfindung sieht vor, das CO₂ aus Verbrennungsprozessen direkt vor Ort als CO₂ für das erfindungsgemäße Verfahren einzusetzen. Demgemäß wird bei einer bevorzugten Ausführungsform des erfindungsgemäßen Verfahrens das eingesetzte gasförmige CO₂ durch Aufreinigung von Abgas aus Verbrennungsprozessen gewonnen, wobei das Abgas bevorzugt vor Ort entstehendes Abgas ist.

Zur Aufreinigung der Abgase kann das Gas z.B. durch einen Wasserabscheider von Feuchteanteilen sowie Rußanteilen befreit werden. Die restlichen Gase, im wesentlichen CO₂, werden dann durch einen konventionellen Kompressor komprimiert und entweder via Gasflaschen oder ein Druckgasnetz am Produktionsort verteilt und steht so dem erfindungsgemäßen Verfahren zur Verfügung.

In Schritt b) des erfindungsgemäßen Verfahren erfolgt das Aufbringen der in Schritt a) erhaltenen CO₂ enthaltenden Kunststoffpaste oder Kunststoffdispersion auf eine Unterlage.

Die Unterlage kann jedes zweckmäßige Substrat sein. Es handelt sich gewöhnlich um eine Unterlage, die nach der Bildung des Schaumstoffs wieder leicht von dem Schaumstoff abgelöst werden kann. Die Unterlage kann z.B. ein Streichpapier, ein Silikonband oder ein Metallband sein. Es ist aber auch denkbar, dass der gebildete Schaumstoff mit der Unterlage verbunden bleiben soll. In diesen Fall kann die Unterlage bzw. das Substrat beispielsweise Teil eines zu bildenden Mehrschichtkonstrukts, z.B. eines zu bildenden Kunstleders, sein.

Für die Aufbringung der CO₂ enthaltenden Kunststoffpaste oder Kunststoffdispersion auf die Unterlage können gängigen Verfahren eingesetzt werden, z.B. Streichen, Rakeln, Sprühen, Drucken oder Gießen.

In Schritt c) wird die gemäß Schritt b) aufgebrachte CO₂ enthaltende Kunststoffpaste oder Kunststoffdispersion wärmebehandelt, um die aufgebrachte CO₂ enthaltende Kunststoffpaste oder Kunststoffdispersion unter Bildung des Schaumstoffs zu schäumen und zu verfestigen.

Die Temperatur zur Wärmebehandlung hängt stark von den eingesetzten Systemen ab. Die Wärmebehandlung der aufgebrachten CO₂ enthaltenden Kunststoffpaste oder Kunststoffdispersion kann z.B. bei einer Temperatur von mindestens 60 °C, bevorzugt mindestens 70°C, erfolgen. Die Temperatur für die Wärmebehandlung kann in Abhängigkeit von dem jeweiligen Polymer z.B. im Bereich von 60 bis 220 °C, bevorzugt 70 bis 180°C erfolgen. Die Wärmebehandlung wird in der Regel in einem Ofen durchgeführt.

Mit steigender Temperatur bei der Wärmebehandlung wird das in der Kunststoffpaste oder Kunststoffdispersion enthaltene CO₂ zunehmend in dem Wasser der Dispersion oder in der Paste bzw. dem Weichmacher der Paste unlöslich und bildet einen Schaum. Dadurch, dass die Schaumstruktur erst beim Aufwärmen entsteht, liegt eine homogenere Verteilung der Blasenstruktur vor. Dies wiederum führt zu einem stabilen mechanischen Schaum.

In einer bevorzugten Ausführungsform koaguliert der Kunststoff in Kontakt mit dem CO₂-Gas durch die pH-Änderung, insbesondere pH-Senkung, lokal, wodurch gebildete CO₂-Blasen in der Kunststoffmatrix stabilisiert werden. Dadurch können in dem Schaumstoff CO₂-Blasen bzw. CO₂-Poren gebildet werden, die eine Hülle aus koaguliertem Kunststoff aufweisen.

Die Wärmebehandlung führt auch zu einer Verfestigung des gebildeten Schaums. Die Verfestigung kann z.B. ein Trocknen, Gelieren und/oder Vernetzen der Dispersion oder Paste beinhalten.

In einer zweckmäßigen Ausführungsform kann die Wärmebehandlung teilweise oder vollständig mittels Infrarot (IR)-Bestrahlung durchgeführt werden. Bei Verwendung von Infrarot (IR)-Bestrahlung, z.B. in Form von IR-Trocknungsfeldern, ergibt sich bei CO₂ beladenen Dispersionen oder Pasten und auch bei den daraus resultierenden Schlagschäumen ein deutlich höherer Energieeintrag. Durch die Absorptionsbande bei 12-18 µm von CO₂ kann hier in der Dispersion oder der Paste wie auch im entstehenden Schaum zusätzlich Energie aufgenommen werden. Dadurch können schnellere Aufheizzeiten und Produktionsgeschwindigkeiten erreicht werden. Ferner kann der Film im Querschnitt homogener aufgeheizt werden.

Bei dem erfindungsgemäßen Verfahren wird der Schaumstoff bevorzugt in Form eines Flächenkörpers bzw. Films hergestellt. Diese Flächenkörper eignen sich zur Aufnahme in ein Mehrschichtkonstrukt, wie z.B. einem Kunstleder. Der Schaumstoff in Form eines Flächenkörpers kann z.B. eine Dicke im Bereich von 0,1 bis 5 mm aufweisen.

Ein Mehrschichtkonstrukt, wie z.B. einem Kunstleder, umfasst dabei bevorzugt neben den gemäß dem erfindungsgemäßen Verfahren hergestellten Schaumstoff ein oder mehrere kompakte (ungeschäumte) und/oder geschäumte Schichten. Geschäumte Schichten können einen unterschiedlichen Schäumungsgrad aufweisen.

Ein Mehrschichtkonstrukt wie z.B. ein Kunstleder kann z.B. eine Deckschicht, mindestens eine Zwischenschicht und eine Kaschierschicht aufweisen, die üblicherweise auf einem Träger, insbesondere einem textilen Träger, angeordnet sind. Zumindest eine oder mehrere Zwischenschichten können z.B. aus dem erfindungsgemäß hergestellten Schaumstoff gebildet werden. Aus Gründen der Verarbeitung und der Kompatibilität ist es häufig zweckmäßig, wenn die meisten oder alle Schichten auf demselben Kunststoff basieren.

Mit dem erfindungsgemäßen Verfahren ist es möglich, dass eine ungeschäumte nicht aufgeschlagene Dispersion oder Paste der Reihe nach mit unterschiedlichen Anteilen an CO₂-Treibmittel in Line versetzt werden kann und somit das Schaumverhalten an die jeweiligen Konstruktionen, idealerweise mit einer Dispersion oder Paste identischer Zusammensetzung, eingestellt werden kann. Dies reduziert den Abfall, Ausschuss und erlaubt zudem eine Anpassung an jeweilige Maschinen bzw. Trocknungskanäle wie auch Trocknungssysteme. Beispielsweise kann für die Deckschicht, Zwischenschicht und Kaschierschicht eines Mehrschichtkonstrukts eine identische Kunststoffpaste oder Kunststoffdispersion, verwendet werden, welche für jede Schicht mit unterschiedlichen CO₂-Anteilen versetzt wurden, um das entsprechende Konstrukt zu generieren.

Die Erfindung betrifft auch einen Schaumstoff, der nach dem vorstehend beschriebenen Verfahren erhältlich ist. Bevorzugt liegt der Schaumstoff in Form eines Flächenkörpers vor. Die vorstehenden Angaben zum erfindungsgemäßen Verfahren gelten in gleicher Weise für den erfindungsgemäßen Schaumstoff. Der erfindungsgemäße Schaumstoff enthält bevorzugt CO₂-Blasen bzw. CO₂-Poren. Es ist besonders bevorzugt, dass der erfindungsgemäße Schaumstoff CO₂-Blasen bzw. CO₂-Poren mit einer Hülle aus koaguliertem Kunststoff aufweist.

Die Erfindung betrifft auch die Verwendung des erfindungsgemäßen Schaumstoffs als eine Schicht in einem Mehrschichtkonstrukt, insbesondere einem Kunstleder.

Die Erfindung betrifft ferner die Verwendung von gasförmigem CO₂ als physikalisches Treibmittel zum Schäumen einer Weichmacher enthaltende Kunststoffpaste oder einer wässrigen Kunststoffdispersion zur Bildung eines Schaumstoffs. Die Verwendung erfolgt bevorzugt wie vorstehend für das erfindungsgemäße Verfahren beschrieben.

Die Erfindung wird nun anhand von Beispielen weiter erläutert, die den Umfang der Erfindung aber in keiner Weise einschränken sollen.

### Beispiele

### Beispiel 1

Im Schlagschaummischer Pico Mix^{®} der Firma Hansa Mix wurde bei einem Gegendruck von 1-3 Bar bei einer vorgegeben Schlagschaumdichte bezogen auf Luft von 300 g/L und einer Rotationszahl von 1200 U/min eine wässrige Polyvinylbutyral-Dispersion (erhalten von Shark Solutions), die anionisch durch Kaliumoleat stabilisiert ist und mit 2 Gew.-% Alginat, bezogen auf den Feststoffgehalt, versetzt wurde, CO₂ aus einer Druckgasflache eingebracht. Dabei konnte man erkennen, dass kein konventioneller Schlagschaum entsteht, welcher eine Dichte von 300 g/L aufweist, sondern, eine nahezu blasenfreie Masse gebildet wird.

Die erhaltene Masse wurde am Mathis-Streichwerk mittels Rakel auf ein Streichpapier aufgebracht und bei einer Temperatur von 75 -170°C für eine Zeit von 20 Sek bis 5 min getrocknet. Dabei war zu erkennen, dass ein stabiler Film mit Schaumstruktur gebildet wurde.

### Beispiel 2

In ähnlicher Weise wie in Beispiel 1 wurde CO₂ in eine wässrige Polyurethan-Dispersion eingebracht. Bei der mit CO₂ aufgeschlagenen Masse von Polyurethan ist ein Schaum nur bedingt erkennbar, da das entsprechende CO₂ gelöst ist. Dieses wir mit steigender Temperatur beim Ausheizen zunehmend in Wasser unlöslich und bildet einen Schaum. Dadurch, dass die Schaumstruktur erst beim Ausheizen entsteht, liegt eine homogenere Verteilung der Blasenstruktur vor. Dies wiederum führt zu einem stabilen mechanischen Schaum.

### Vergleichsbeispiel 1

Zum Vergleich wurde die Polyurethan-Dispersion nicht mit CO₂, sondern mit Luft versetzt. Im Schlagschaum mit Luft, welche sich im wässrigen Medium wie oben beschrieben nur sehr bedingt löst, sind die Luftblasen des aufgeschlagenen Schaums deutlich zu erkennen. Beim Ausheizen des PUR-Schlagschaumes kann man beim Einfahren des nassen Films in den Ofen, aufgetragen auf einem Streichpapier, erkennen, dass die Blasenstruktur beeinträchtigt wird bzw. die Blasen des Schlagschaumes kollabieren.

## Patentansprüche

1. Verfahren zur Herstellung eines Schaumstoffs, umfassend
a) das Einbringen von gasförmigem CO₂ in eine Weichmacher enthaltende Kunststoffpaste oder eine wässrige Kunststoffdispersion, um eine CO₂ enthaltende Kunststoffpaste oder Kunststoffdispersion zu erhalten,
b) das Aufbringen der CO₂ enthaltenden Kunststoffpaste oder Kunststoffdispersion auf eine Unterlage und
c) die Wärmebehandlung der aufgebrachten CO₂ enthaltenden Kunststoffpaste oder Kunststoffdispersion, um die aufgebrachte CO₂ enthaltende Kunststoffpaste oder Kunststoffdispersion unter Bildung des Schaumstoffs zu schäumen und zu verfestigen.

2. Verfahren nach Anspruch 1, wobei das gasförmige CO₂ mittels Überdruck in die Weichmacher enthaltende Kunststoffpaste oder die wässrige Kunststoffdispersion eingebracht wird, wobei das gasförmige CO₂ bevorzugt mittels Überdruck durch Einpressen, Einblubbern oder mittels Schlagschaummischer in die Weichmacher enthaltende Kunststoffpaste oder die wässrige Kunststoffdispersion eingebracht wird, wobei das Einbringen mittels Schlagschaummischer bevorzugt ist.

3. Verfahren nach Anspruch 2, wobei der Überdruck mindestens 0,1 bar, bevorzugt mindestens 0,5 bar, besonders bevorzugt mindestens 1 bar beträgt, wobei der Überdruck im Fall von wässrigen Kunststoffdispersionen bevorzugt im Bereich von 0,1 bis 5 bar, bevorzugter 0,5 bis 5 bar, besonders bevorzugt 1 bis 4 bar liegt, und/oder
wobei der Überdruck im Fall von Weichmacher enthaltenden Kunststoffpasten bevorzugt im Bereich von 0,5 bis 5 bar, bevorzugter 2 bis 4 bar, liegt.

4. Verfahren nach einem der vorhergehenden Ansprüche, wobei die wässrige Kunststoffdispersion oder die Weichmacher enthaltende Kunststoffpaste ein oder mehrere Tenside enthält.

5. Verfahren nach einem der vorhergehenden Ansprüche, wobei die wässrige Kunststoffdispersion oder die Weichmacher enthaltende Kunststoffpaste ein oder mehrere Verdickungsmittel enthält.

6. Verfahren nach einem der vorhergehenden Ansprüche, wobei die wässrige Kunststoffdispersion eine anionisch stabilisierte wässrige Kunststoffdispersion ist und/oder wobei die wässrige Kunststoffdispersion einen pH-Wert von mindestens 7, bevorzugt mindestens 8, bevorzugter mindestens 9 aufweist.

7. Verfahren nach einem der vorhergehenden Ansprüche,
wobei die wässrige Kunststoffdispersion eine wässrige Dispersion von Polyvinylbutyral (PVB), Polyvinylchlorid (PVC), Polyurethan (PU), Polyamid, Polyacrylat, Polyester oder Polyolefin ist, wobei eine wässrige PVB-Dispersion, eine wässrige PU-Dispersion, eine wässrige Polyacrylat-Dispersion oder eine wässrige Polyolefin-Dispersion bevorzugt ist und eine wässrige PVB-Dispersion besonders bevorzugt ist, und/oder
wobei die Weichmacher enthaltende Kunststoffpaste eine Weichmacher enthaltende PVC-Paste ist.

8. Verfahren nach einem der vorhergehenden Ansprüche, wobei das Einbringen von gasförmigem CO₂ in die Weichmacher enthaltende Kunststoffpaste oder die wässrige Kunststoffdispersion bei einer Temperatur im Bereich von 0 bis 40 °C, bevorzugt 15 bis 30°C, erfolgt, bevorzugt mittels Überdruck.

9. Verfahren nach einem der vorhergehenden Ansprüche, wobei die Wärmebehandlung der aufgebrachten CO₂ enthaltenden Kunststoffpaste oder Kunststoffdispersion bei einer Temperatur von mindestens 60 °C, bevorzugt mindestens 70°C, erfolgt.

10. Verfahren nach einem der vorhergehenden Ansprüche, wobei das gasförmige CO₂ in einer solchen Menge eingebracht wird, dass die Dichte bei 25 °C der Weichmacher enthaltenden Kunststoffpaste oder der wässrigen Kunststoffdispersion auf einen Wert im Bereich von 250 g/L bis 950 g/L, bevorzugt von 500 g/L bis 800 g/L, eingestellt wird.

11. Verfahren nach einem der vorhergehenden Ansprüche, wobei das eingesetzte gasförmige CO₂ durch Aufreinigung von Abgas aus Verbrennungsprozessen gewonnen wird, wobei das Abgas bevorzugt vor Ort entstehendes Abgas ist.

12. Verfahren nach einem der vorhergehenden Ansprüche, wobei die Wärmebehandlung teilweise oder vollständig mittels Infrarot (IR)-Bestrahlung durchgeführt wird.

13. Verfahren nach einem der vorhergehenden Ansprüche, wobei der Schaumstoff in Form eines Flächenkörpers hergestellt wird.

14. Verfahren nach einem der vorhergehenden Ansprüche, bei dem der Kunststoff in Kontakt mit dem CO₂-Gas durch die pH-Änderung, insbesondere pH-Senkung, lokal koaguliert und gebildete CO₂-Blasen in der Kunststoffmatrix stabilisiert.

15. Schaumstoff, erhältlich nach einem Verfahren nach einem der Ansprüche 1 bis 14, bevorzugt in Form eines Flächenkörpers, wobei der Schaumstoff bevorzugt CO₂-Blasen mit einer Hülle aus koaguliertem Kunststoff aufweist.

16. Verwendung eines Schaumstoffs nach Anspruch 15 als eine Schicht in einem Mehrschichtkonstrukt, insbesondere einem Kunstleder.

17. Verwendung von gasförmigem CO₂ als physikalisches Treibmittel zum Schäumen einer Weichmacher enthaltende Kunststoffpaste oder einer wässrigen Kunststoffdispersion zur Bildung eines Schaumstoffs.
